Europäisches Patentamt

European Patent Office

Office européen des brevets

(19)

(11) Veröffentlichungsnummer: **0 180 652**
**B1**

# (12) EUROPÄISCHE PATENTSCHRIFT

(45) Veröffentlichungstag der Patentschrift:
08.02.89

(21) Anmeldenummer: 84113123.8

(22) Anmeldetag: 31.10.84

(51) Int. Cl.⁴: **G 01 S 15/14,** G 01 S 7/52,
G 01 S 15/10

(54) Verfahren zum Senden bzw. Empfang einer periodischen Impulsfolge.

(43) Veröffentlichungstag der Anmeldung:
14.05.86 Patentblatt 86/20

(45) Bekanntmachung des Hinweises auf die Patenterteilung:
08.02.89 Patentblatt 89/6

(84) Benannte Vertragsstaaten:
AT CH DE FR GB LI NL

(56) Entgegenhaltungen:
EP-A- 0 036 186
DE-A- 3 031 980

ULTRASONICS, Band 13, Nr. 3, Mai 1975, Seiten 110-112,
Guildford, GB; T.G. WINTER u.a.: "On driving a
transducer to produce pulses shorter than the natural
period of the transducer"
IEEE TRANSACTIONS ON INSTRUMENTATION AND
MEASUREMENT, Band IM-33, Nr. 2, Juni 1984, Seiten
128-129, IEEE, New York, US; P.K. CHANDE u.a.: "A fully
compensated digital ultrasonic sensor for distance
measurement"

(73) Patentinhaber: **Honeywell Regelsysteme GmbH,
Kaiserleistrasse 55, D-6050 Offenbach am Main (DE)**

(72) Erfinder: **Drefahl, Dieter, Dr. rer pol., Pferdslache 13,
D-6450 Hanau (DE)**

(74) Vertreter: **Herzbach, Dieter et al, Honeywell Europe S.A.
Holding KG Patent- und Lizenzabteilung
Kaiserleistrasse 55 Postfach 184, D-6050 Offenbach am
Main (DE)**

## Beschreibung

Die vorliegende Erfindung bezieht sich auf ein Verfahren nach dem Gattungsbegriff des Patentanspruches 1. Dieses Verfahren findet Anwendung bei der Laufzeitmessung eines Signals, wobei ein elektroakustischer Wandler ein Signal abstrahlt und ein Empfänger, der mit dem Sender identisch sein kann, das ausgesandte Signal nach Durchlauf einer Übertragungsstrecke empfängt.,

Akustische Laufzeitmessungen machen im Prinzip von den gleichen Messmethoden Gebrauch, wie sie in der Radartechnik verwendet werden und z.B. in dem Buch «Introduction to Radar Systems», Skolnik, McGraw-Hill 1980, Seiten 400-402 beschrieben sind. Hierbei ist es bekannt, für die Laufzeitmessung die Über- oder Unterschreitung eines Pegels bezüglich der ansteigenden oder abfallenden Flanke eines Echoimpulses auszuwerten. Auch ist es bekannt, einen adaptiven Schwellwertpegel vorzugeben, der an die Impulsamplitude angepasst ist. Bedingt durch die Übertragungsstrecke ergeben sich Veränderungen der Impulsform und die Überlagerung von Rauschsignalen, was zu Messfehlern führt. Elektroakustische Wandler führen zudem aufgrund ihrer trägen Masse selbst bei Anregung in ihrer Eigenfrequenz zu akustischen Signalen, deren Einhüllenden nur allmählich ansteigt und abfällt, wodurch Messfehler im allgemeinen noch begünstigt werden.

Es ist daher die Aufgabe der vorliegenden Erfindung, ein Verfahren der eingangs genannten Art bezüglich seiner Messgenauigkeit zu verbessern. Die Lösung dieser Aufgabe gelingt gemäss dem im Patentanspruch 1 gekennzeichneten Verfahren. Weitere vorteilhafte Ausgestaltungen des erfindungsgemässen Verfahrens sind den Unteransprüchen entnehmbar.

Das erfindungsgemässe Verfahren macht von verschiedenen Massnahmen Gebrauch, um die Messgenauigkeit zu erhöhen. Zunächst wird durch entsprechende Beaufschlagung des sendeseitigen Wandlers mit einer speziellen Treiber-Impulsfolge die Flankensteilheit der Einhüllenden am Ende der Impulsfolge vergrössert. Sodann erfolgt die Triggerung des von dem Wandler angesteuerten Empfängers mit der Rückflanke der Einhüllenden. Dies hat den Vorteil, dass man vorausgehend die maximale Amplitude der Einhüllenden messen und die Triggerung bei einem vorgebbaren prozentualen Wert der maximalen Amplitude vornehmen kann, wodurch der Triggerzeitpunkt infolge des unterschiedlich vorgegebenen Triggerpegels konstant bleibt. Weitere Vorteile erzielt man durch eine Logarithmierung des empfangenen Signales.

Anhand der Figuren der beiliegenden Zeichnung sei im folgenden die Problematik bei dem gattungsgemässen Verfahren und die Lösung gemäss der Erfindung näher beschrieben.

Es zeigen:

Figuren 1a, b jeweils den Verlauf eines, einen Wandler treibenden und eines von diesem abgestrahlten Signals;

Fig. 2 Hüllkurven von zwei unterschiedlich gedämpften Empfangssignalen;

Figuren 3a, b jeweils den Verlauf eines herkömmlichen und eines erfindungsgemäss modifizierten Treibersignals zur Ansteuerung eines Wandlers;

Figuren 4a, b jeweils die Einhüllenden des von dem Wandler abgestrahlten Signals bei Verwendung eines herkömmlichen und eines erfindungsgemäss modifizierten Treibersignals;

Fig. 5 das erfindungsgemäss Prinzip der adaptiven Triggerung auf der Rückflanke der Einhüllenden;

Fig. 6 ein Blockschaltbild einer erfindungsgemässen Treiberschaltung; und

Fig. 7 ein Blockschaltbild einer erfindungsgemässen Empfangsschaltung.

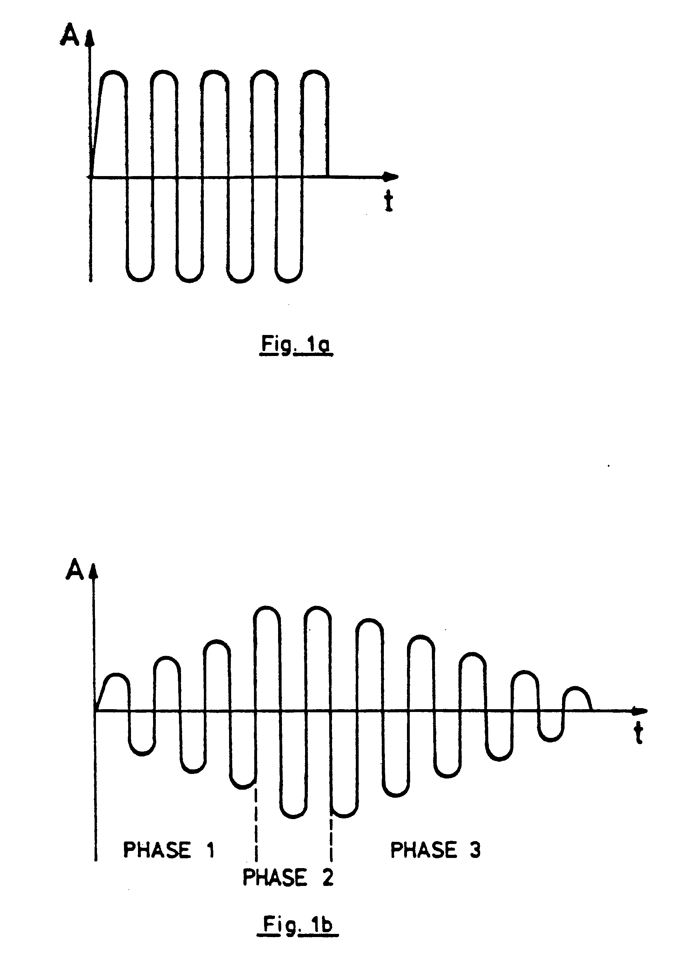

Steuert man einen Wandler begrenzter Bandbreite, wie beispielsweise einen Ultraschallwandler mit einer sinusförmigen Treiber-Impulsfolge gemäss Fig. 1a an, wobei diese Treiber-Impulsfolge prinzipiell auch durch eine Rechteck-Impulsfolge vorgegeben sein kann, so strahlt dieser ein Signal gemäss Fig. 1b ab, welches in einer ersten Phase der sogenannten Anschwingphase unterproportional zum elektrischen Treibersignal ist, in einer zweiten Phase in der sogenannten eingeschwungenen Phase proportional zum elektrischen Treibersignal ist und in einer dritten Phase der sogenannten Ausschwingphase überproportional zum elektrischen Treibersignal ist. Im allgemeinen ist die Ausschwingphase länger als die Anschwingphase.

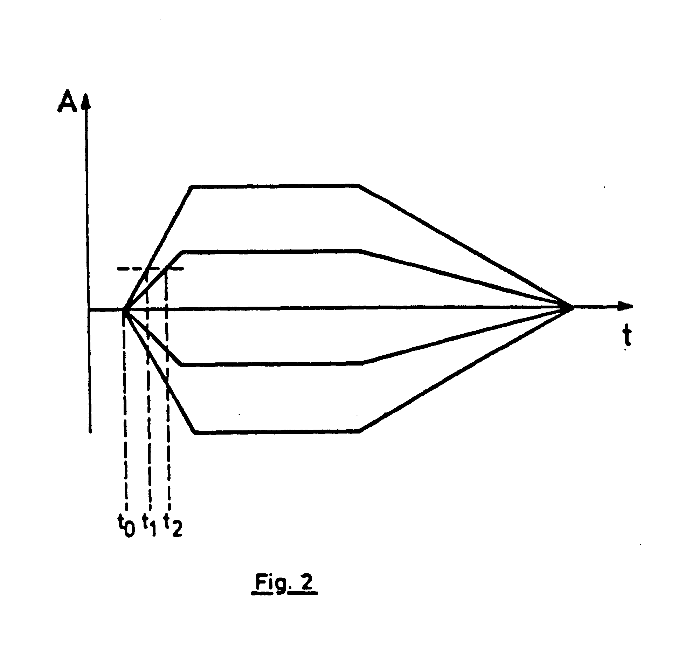

Betrachtet man die Hüllkurve des empfangenen Wandlersignals gemäss Fig. 2, so sieht man, dass dieses Signal in Abhängigekti von der Länge der Übertragungsstrecke und des durchlaufenen Mediums eine unterschiedliche Dämpfung erfährt. Gibt man in diesem Fall einen festen Triggerpegel vor, so sieht man, dass in Abhängigkeit von der Signaldämpfung die Triggerung in den Zeitpunkten $t_1$ bzw. $t_2$ erfolgen kann, die nicht zeitlich übereinstimmen.

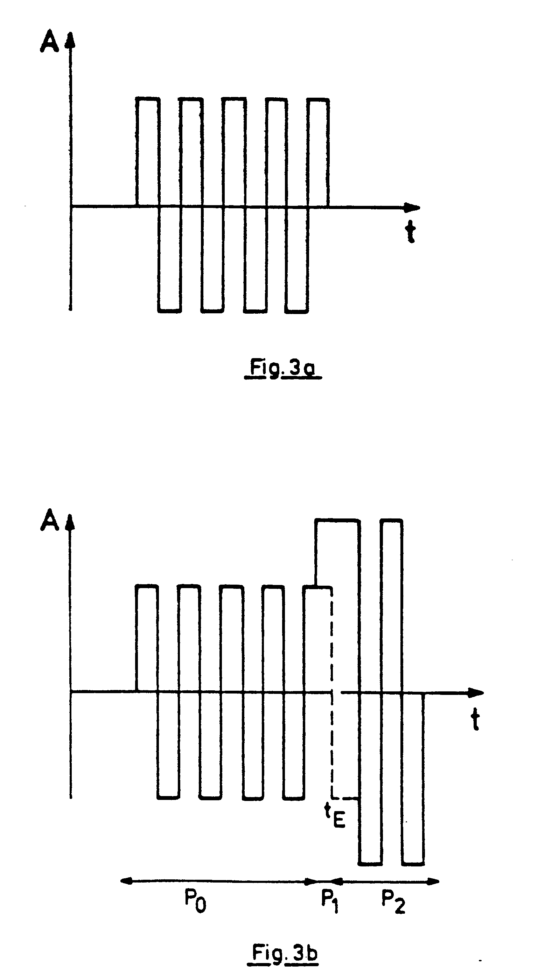

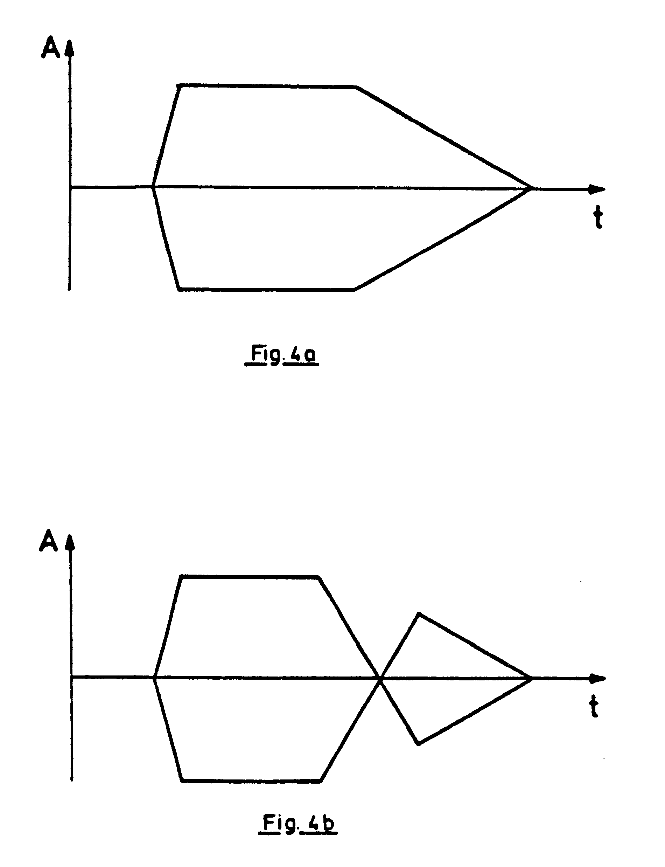

Um dem entgegenzuwirken bzw. um dies zu vermeiden, wird anstelle der in Fig. 3a dargestellten Treiber-Impulsfolge nunmehr eine modifizierte Treiber-Impulsfolge gemäss Fig. 3b an den Wandler angelegt. Um in der Ausschwingphase der Hüllkurve eine relativ steile Flanke zu erzeugen, wird von folgenden Massnahmen Gebrauch gemacht: Statt im Zeitpunkt $t_E$ das elektrische Treibersignal $P_0$ einfach abzuschalten, wird 90° phasenverschoben vor dem Zeitpunkt $t_E$ ein Impuls $P_1$ mit einer Breite von 90°, mit gleicher Polarität wie das elektrische Treibersignal $P_0$ aber mit höherer Amplitude auf den Wandler geschaltet. Anschliessend wird mit der Amplitude des Impulses $P_1$ ein Signal $P_2$ über mehrere Perioden erzeugt, dass jedoch zu dem ursprünglichen Treibersignal $P_0$ um 180° phasenverschoben ist. Hierdurch wird der Wandler zeitlich beschleunigt bedämpft und weist eine signifikant höhere Flankensteilheit des abgestrahlten Signals auf, was man Fig. 4b entnehmen kann, wo die Ausschwingphase der Einhüllenden deutlich steiler als bei der mit der herkömmlichen Treiber-Impulsfolge erzielten Einhüllenden ist. Die Tatsache, dass die Einhüllende gemäss Fig. 4b noch eine Nebenzipfel aufweist, ist ohne Belang, da dieser bei der Auswertung nicht berücksichtigt wird.

Der Impuls $P_1$ kann in der Praxis zugunsten eines einfacheren Schaltungsaufbaus fortgelassen werden; seine Aufgabe besteht im wesentlichen in der Reduzierung der Belastung des Wandlers während

des Phasensprungs zu der Impulsfolge $P_2$. Im übrigen kann diese Impulsfolge mit konventioneller Hardware wie beispielsweise TTL-Bausteinen verwirklicht werden, wobei die Impulse $P_0$ gezählt werden, bei einem bestimmten Zählstand der Impuls $P_1$ erzeugt wird und nachfolgend nach einer Umschaltung der Phasenlage die Impulsfolge $P_2$ ausgegeben wird. In einfacher Weise lässt sich diese Impulsfolge auch durch entsprechende Programmierung eines Mikroprozessors erzeugen.

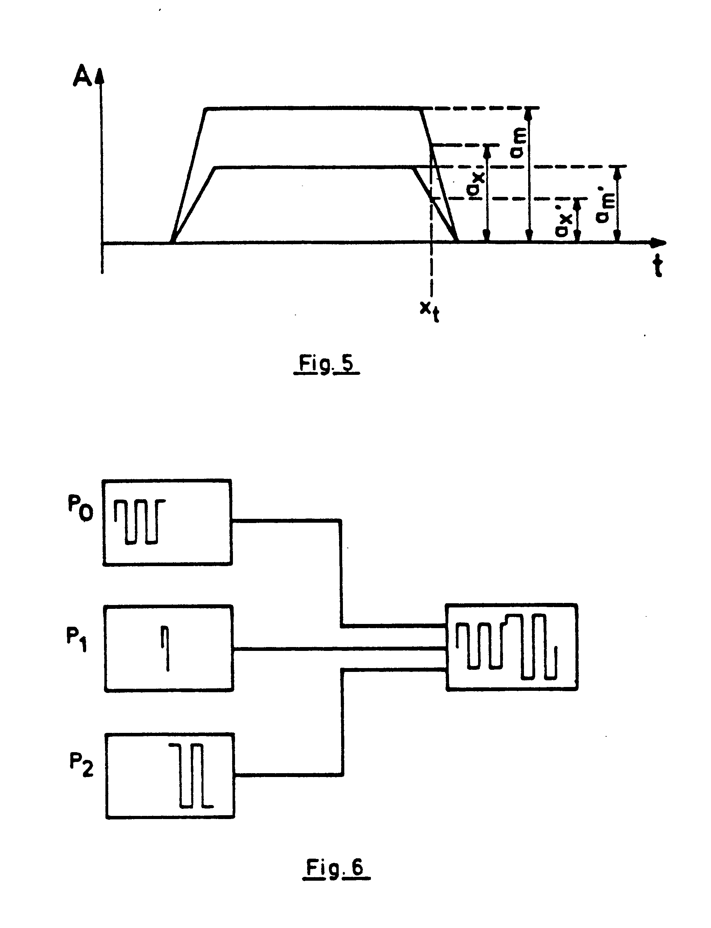

Nachdem mit dieser Massnahme die Steilheit der Ausschwingphase der Einhüllenden praktisch der Steilheit der Anschwingphase angeglichen worden ist bzw. diese noch übertrifft, können nunmehr mit Vorteil Amplitudenschwankungen der Einhüllenden kompensiert werden. Betrachtet man Fig. 5, so wird die Amplitude $a_m$ der Einhüllenden im eingeschwungenen Zustand, d.h. während der Phase 2 gemessen, die der maximalen Signalamplitude entspricht. Der Triggerpunkt wird sodann gemäss folgender Bedingung festgelegt:

$$x_t = a_x/a_m = V$$

wobei $a_x$ den momentanen Messwert darstellt und V mit einem Wert zwischen 0 und 1 vorgegeben ist. D.h. es wird ein Triggersignal dann ausgelöst, wenn das Verhältnis V zwischen der aktuellen Amplitude $a_x$ und der maximalen Amplitude $a_m$ einen festgelegten Quotienten unterschreitet. Der Quotient V legt hierbei das Signal/Rauschverhältnis sowie die Empfindlichkeit des Triggersystems fest. Je näher der Quotient V bei 1 gewählt wird, desto empfindlicher wird das System sowohl für das Nutzsignal als auch für irgendwelche Störsignale.

Wie man aus Fig. 5 erkennt, führen jetzt zufällige Amplitudenveränderungen nicht mehr zu einer Veränderung des Triggerzeitpunktes $x_t$ soweit diese Änderung nicht während der Zeitdauer der empfangenen Einhüllenden auftreten, wovon man ausgehen kann.

Schaltungstechnisch kann man die Messglieder zur Erfassung der maximalen Amplitude und zur Erfassung der aktuellen Amplitude durch Spitzenwertdetektoren mit unterschiedlicher Speicherzeit realisieren. Ein Spitzenwertdetektor mit einer langen Speicherzeit liefert hierbei das zur Maximalamplitude gehörige Signal $a_m$, während ein Spitzenwertdetektor mit sehr kurzer Speicherzeit, die gerade so lang gewählt ist, dass dieser Detektor als Hüllkurvendetektor arbeitet, das aktuelle Signal $a_x$ liefert. Ein nachgeschalteter Komparator liefert das eigentliche Triggersignal sobald der Quotient beider Werte den festgelegten Schwellwert unterschreitet.

Wenn das zu triggernde Signal eine hohe Dynamik aufweist, d.h. wenn beispielsweise stark unterschiedliche Dämpfungen durch veränderte Längen der Übertragungsstrecke vorliegen, so müssen in dem Empfangs- und Triggerteil Vorkehrungen gegen eine Übersteuerung des empfangenen Signals getroffen werden. Man kann zeigen, dass ein auf der Empfängerseite lediglich begrenztes Signal einen Triggerimpuls im falschen Zeitpunkt erzeugen würde. Deshalb wird das empfangene Signal einem Verstärker mit logarithmischer Kennlinie zugeführt, dessen Ausgangsspannung $U_a$ in Abhängigkeit von der Eingangsspannung $U_e$ durch folgende Beziehung vorgegeben ist:

$$U_a = Q \cdot lg (U_e)$$

Q stellt hierbei den Verstärkungsfaktor dar. Durch geeignete Wahl der Kennlinie, d.h. der Basis des Logarithmus, kann sichergestellt werden, dass auch bei den grösstmöglichen Amplituden der Eingangsspannung $U_e$ das Ausgangssignal $U_a$ nicht in die Begrenzung bzw. Übersteuerung des Verstärkers gerät. Ein derartiger logarithmischer Verstärker ist ein handelsübliches Bauelement.

Durch Einsatz des logarithmischen Verstärkers reduziert sich die vorstehend gegebene Definition des Triggerzeitpunktes von einem Quotienten zu einer einfachen Differenz gemäss folgender Beziehung:

$$b = lg (V) = lg (a_x) - lg (a_m)$$

Aus dieser Gleichung ist ersichtlich, dass zum Zeitpunkt der Triggerung das logarithmierte Signal lg $(a_m)$ um einen wählbaren Betrag über dem logarithmierten Signal lg $(a_x)$ liegen muss. Dies ist mit einem nachgeschalteten Komparator leichter zu realisieren als die Auslösung durch einen Quotienten.

Gemäss Fig. 6 ist ein Blockschaltbild zur Erzeugung der modifizierten Treiber-Impulsfolge dargestellt, wie sie in Fig. 3b veranschaulicht ist. Zu diesem Zweck sind drei die einzelnen Impulsfolgen bzw. Impulse erzeugenden Impulsgeneratoren $P_0$, $P_1$ und $P_2$ dargestellt, deren Signale durch entsprechend gesteuerte zeitliche Ein- und Ausschaltung zu der zusammengesetzten Treiber-Impulsfolge überlagert werden.

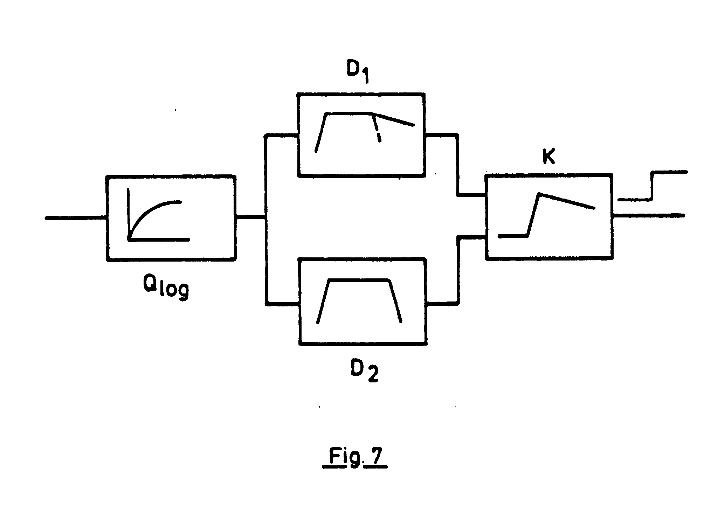

Gemäss Fig. 7 wird das empfangene Signal zunächst einem logarithmischen Verstärker $Q_{log}$ zugeführt, und nachfolgend wird das logarithmisch verstärkte Empfangssignal sowohl einem Spitzenwertdetektor $D_1$ mit langer Speicherzeit zur Erfassung der maximalen Amplitude als auch einem Spitzenwertdetektor $D_2$ mit kürzer Speicherzeit zur Erfassung der aktuellen Amplitude zugeführt. Anschliessend werden sowohl die maximale Amplitude als auch die aktuelle Amplitude einem Komparator K zugeführt, der ein Trigger-Ausgangssignal erzeugt, wenn die Differenz $U_{D1} - U_{D2} > b$ ist. b stellt hierbei die festgelegte Triggerschwelle dar.

## Patentansprüche

1. Verfahren zum Senden bzw. Empfang einer akustischen periodischen Impulsfolge, wobei ein elektrischer Treiber einen akustischen Wandler ansteuert und am Ende einer Übertragungsstrecke wiederum ein akustischer Wandler einen elektrischen Empfänger ansteuert, um durch Laufzeitmessung zwischen Senden und Empfang die Länge der Übertragungsstrecke zu bestimmen, wobei empfängerseitig das Unterschreiten eines vorgegebenen Pegels bezüglich der Rückflanke der Einhüllenden der empfangenen Signalfolge ausgewertet wird, dadurch gekennzeichnet, dass sendeseitig anschliessend an eine den akustischen Wandler treibende Impulsfolge $(P_0)$ ein sich über mehrere Perioden erstreckendes Treibersignal $(P_2)$ mit erhöter Amplitude aber mit einer 180°-Phasenverschiebung zu dem ursprünglichen Treibersignal erzeugt wird.

2. Verfahren nach Anspruch 1, dadurch gekennzeichnet, dass vor dem Abschaltpunkt der treibenden Impulsfolge (P₀) um 90° zurückversetzt ein sich über 90° erstreckender Erhöhungsimpuls (P₁) mit gleicher Polarität wie die treibende Impulsfolge aber erhöhter Amplitude erzeugt wird und dass das phasenverschobene Treibersignal (P₂) im Anschluss an den Erhöhungsimpuls (P₁) erzeugt wird.

3. Verfahren nach Anspruch 1 oder 2, dadurch gekennzeichnet, dass das empfangene Signal logarithmiert wird, dass die maximale Amplitude (a_m) der Hüllkurve und die momentane Amplitude (a_x) der Hüllkurve gemessen werden und dass die Triggerung bei einer vorgebbaren Differenz der beiden Messwerte erfolgt.

**Claims**

1. A method for the emission and reception of a periodical acoustical pulse train, whereat an electrical driver drives an acoustical transducer and at the end of the transmission path an acoustical transducer drives an electrical receiver in order to determine the length of the transmission path by measuring the propagation time between emission and reception and whereat at the reception end falling of the trailing edge of the envelope of the received signal train below a predetermined level is evaluated, characterized in that at the emission end following to the pulse train (P₀) driving the acoustical transducer a driving signal (P₂) is generated during a plurality of periods which has an increased amplitude but a 180° difference in phase with respect to the original driving signal.

2. Method according to claim 1, characterized in that before switching-off of the driving pulse train (P₀) and 90° in advance of said switching-off an intensification pulse (P₁) is generated which extends over 90° and which has the same polarity as the driving pulse train but an increased amplitude and that the driving signal (P₂) shifted in phase is generated subsequent to the intensification pulse (P₁).

3. A method according to claim 1 or 2, characterized in that the received signal is logarithmically treated, that the maximum amplitude (a_m) of the envelope and the momentary amplitude (a_x) of the envelope are measured and that triggering is done at a predetermined difference of both measured values.

**Revendications**

1. Procédé pour l'émission et la réception d'une série d'impulsions périodiques, dans lequel un excitateur électrique excite un transducteur acoustique et à la fin d'un trajet de propagation un transducteur acoustique excite de nouveau un récepteur électrique, pour déterminer par mesure de la durée de parcours entre émission et réception la longueur du trajet de propagation, et dans lequel on évalue côté réception le dépassement vers le bas d'un seuil prédéterminé pour ce qui concerne le flanc arrière de l'enveloppe des impulsions de la série de signaux reçus, caractérisé en ce que côté émission immédiatement après une série d'impulsion (P₀) excitant le transducteur acoustique on émet un signal d'excitation (P₂) d'amplitude accrue s'étendant sur plusieurs périodes mais déphasé de 180° par rapport au signal original.

2. Procédé selon la revendication 1, caractérisé en ce qu'on émet avant le point d'interruption de la série d'impulsions d'excitation (P₀) une impulsion d'accroissement (P₁) décalée en arrière de 90° de même polarité que la série d'impulsions d'excitation mais d'amplitude accrue s'étendant sur 90° et en ce que le signal d'excitation (P₂) déphasé est émis immédiatement après l'impulsion d'accroissement (P₁).

3. Procédé selon la revendication 1 ou 2, caractérisé en ce que l'on prend le logarithme du signal reçu, en ce que l'on mesure l'amplitude maximale (a_m) de la courbe enveloppe et l'amplitude instantanée (a_x) de la courbe enveloppe et en ce que le déclenchement résulte d'une différence des deux valeurs mesurées pouvant être prédéterminées.

Fig. 1a

PHASE 1    PHASE 2    PHASE 3

Fig. 1b

**Fig. 2**

Fig. 3a

$P_0$   $P_1$   $P_2$

$t_E$

Fig. 3b

A

t

Fig. 4a

A

t

Fig. 4b

Fig. 5

Fig. 6

Fig. 7